# FASCICULE DE BREVET EUROPEEN

(11) **EP 3 089 901 B1**
(45) Date de publication et mention de la délivrance du brevet: **18.10.2017**
(21) Numéro de dépôt: 14827445.9
(22) Date de dépôt: 23.12.2014
(51) Int. Cl.: B60T 13/74, F16D 51/22, F16D 51/50, F16D 65/22

(54) **MOTOREDUCTEUR A TRAIN EPICYCLOIDAL, FREIN A TAMBOUR, FREIN A DISQUE ET DISPOSITIF DE FREINAGE AINSI EQUIPES**
PLANETENREDUKTIONSGETRIEBE, TROMMEL- UND SCHEIBENBREMSE UND BREMSVORRICHTUNG MIT SO EINEM PLANETENREDUKTIONSGETRIEBE
MOTOR-REDUCER WITH PLANETARY GEARSET, DRUM AND DISC BRAKE AND BRAKING DEVICE PROVIDED WITH SAME

(30) Priorité: 30.12.2013 FR 1363708
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy Le Grand (FR); DUPAS, Christophe, 91120 Palaiseau (FR); PASQUET, Thierry, 94700 Vincennes (FR); MOLINARO, Alberto, 93160 Noisy Le Grand (FR)
(74) Mandataire: Pontet Allano & Associes
(86) Numéro de dépôt international: PCT/EP2014/079203
(87) Numéro de publication internationale: WO 2015/101562

(56) Documents cités:
- DE-A1- 19 851 670
- DE-A1-102005 048 339
- US-A1- 2010 096 224
- US-A1- 2013 087 417
- US-A1- 2013 087 422

## Description

La présente invention se rapporte à un motoréducteur, en particulier pour motoriser un actionneur de frein à disque ou à tambour de véhicule automobile, par exemple dans le cadre d'un frein à tambour de type « bi-mode ». La présente invention se rapporte aussi à un frein à tambour et à un dispositif de freinage ainsi équipés.

### Etat de la technique

Un motoréducteur se compose en général d'un moteur électrique dont l'arbre de sortie est raccordé à un ensemble d'engrenages produisant une réduction de la vitesse et une augmentation du couple, ce qui est très souvent avantageux pour réaliser une motorisation électrique. Dans la plupart des cas, un motoréducteur comprend des pignons à contacts extérieurs qui sont placés en cascade.

Un frein à tambour classique comprend typiquement un tambour, coaxial avec la roue, et consistant en un cylindre creux solidaire de la pièce à freiner. Lors du freinage, les garnitures des segments de freinage frottent sur la surface intérieure du tambour. Pour cela, un moyen d'actionnement écarte de l'axe une des extrémités de chacun des deux segments. Les extrémités opposées s'appuient, tangentiellement à la rotation, sur une plaque de butée solidaire d'un plateau immobilisé en rotation. Lorsque les segments sont mis en pression contre la piste du tambour, tout mouvement ou effort en rotation de la roue imprime un couple de rotation aux segments, qu'ils transmettent au plateau par cette plaque de butée. En général, les deux segments sont actionnés en leurs deux extrémités d'un même côté, typiquement par un même cylindre hydraulique à double piston, dans un mode de fonctionnement appelé « simplex ».

Il est également connu d'actionner électriquement les segments d'un frein à tambour. Ainsi, le document US 8 011 482 décrit un mécanisme dans lequel les segments sont actionnés par une biellette déplacée en translation par un système vis-écrou qui est actionné en rotation par un moteur par l'intermédiaire d'un engrenage. Le document EP 2 195 219 présente un système de frein de stationnement dans lequel les segments sont actionnés par un élément fileté déplacé en translation par l'intermédiaire d'une roue entraînée par une vis sans fin solidaire en rotation de l'arbre de sortie d'un moteur électrique.

Les documents DE 198 51 670 A1, DE 10 2005 048339 A1 et US 2010/096224 A1 décrivent des dispositifs de freinage comprenant un réducteur.

Un but de la présente invention est de fournir un motoréducteur bien adapté à un actionneur de frein à tambour, en particulier compact, robuste, économique et avec un bon rendement énergétique.

### Exposé de l'invention

Suivant un premier aspect de l'invention, le motoréducteur comprenant un moteur électrique, un réducteur et une sortie rotative couplée au moteur électrique par l'intermédiaire du réducteur, est caractérisé en ce qu'il comprend en outre un boîtier dans lequel est fixé le moteur et en ce que le réducteur est à train épicycloïdal et comprend au moins une couronne dentée intérieurement qui est solidaire du boîtier et formée dans la matière dudit boîtier.

Une motorisation électrique fournit souvent des vitesses de rotation élevées, ce qui oblige à prévoir une très grande démultiplication pour obtenir un déplacement faible avec un effort suffisant. Cela est rendu possible par au moins un réducteur à train épicycloïdal à couronne fixe. De plus, lorsque l'environnement d'une telle motorisation est exposé aux poussières ou saletés, le mécanisme motoréducteur doit être protégé et relativement étanche vis-à-vis de cet environnement, en particulier dans le cas de la motorisation d'un actionneur de frein à tambour. Le mécanisme motoréducteur selon l'invention contenu dans un boîtier dans lequel est formée la couronne dentée intérieurement pour le train épicycloïdal permet de satisfaire à tout ou partie de ces contraintes. Le boîtier étant immobilisé en rotation, il fournit à la couronne le couple de réaction nécessaire au fonctionnement du train épicycloïdal. Il est en outre facile et économique à fabriquer. L'invention procure notamment un bon rendement énergétique de la transmission depuis la motorisation, ce qui permet d'obtenir un effort plus important ou une vitesse d'actionnement plus élevée ou d'utiliser une motorisation moins puissante, ou un meilleur compromis entre ces performances. Elle permet une facilité et une souplesse d'adaptation aux besoins et contraintes d'un concepteur de véhicule ou de sous-ensemble de véhicule ; par exemple pour l'adaptation à des véhicules ou des sous-ensembles de véhicule existants, ou pour l'intégration dans des véhicules ou des sous-ensembles de véhicule en cours de conception. En particulier, l'invention est compatible avec les évolutions techniques des modes de commande des organes automobiles, notamment dans le cas du frein de stationnement à commande électrique. Elle permet aussi de mettre en oeuvre plusieurs niveaux de performances de motorisation avec un même modèle d'actionneur.

Selon des perfectionnements optionnels de l'invention :
- le réducteur comprend deux trains épicycloïdaux montés mécaniquement en série de façon que la sortie d'un premier de ces trains soit solidaire en position angulaire de l'entrée d'un deuxième de ces trains, ladite au moins une couronne comprenant deux couronnes faisant partie chacune de l'un des deux trains ;
- les deux couronnes sont formées par une unique denture ayant une dimension axiale correspondant à celle des deux trains montés dans le boîtier à la suite l'un de l'autre dans le prolongement axial du moteur ;
- le boîtier comprend un collet séparant le moteur et le réducteur, et le réducteur comprend une roue planétaire menante, un porte-satellites mené, et des satellites qui sont montés en libre rotation sur des tourillons de ce porte-satellites mené et en libre translation sur ces tourillons entre le collet et ce porte-satellites mené ;
- dans le cas où il y a deux trains épicycloïdaux, le deuxième train comprend une roue planétaire menante solidaire en rotation d'un porte-satellites du premier train, un porte-satellites mené, et des satellites qui sont montés en libre rotation sur des tourillons de ce porte-satellites mené et en libre translation sur ces tourillons entre le porte-satellites mené et le porte-satellites du premier train ;
- la sortie rotative est solidaire d'un porte-satellites mené qui est maintenu axialement par un jonc d'arrêt engagé dans une rainure formée dans la matière du boîtier à une première extrémité de la couronne dentée, l'ensemble des composants mobiles du réducteur ayant une liberté de positionnement axial mutuel entre le jonc d'arrêt et un épaulement formé intérieurement sur le boîtier en une seconde extrémité de la couronne ;
- la couronne et le moteur sont montés coaxiaux.

Ces perfectionnements facilitent grandement la réalisation d'un tel motoréducteur, ainsi que son assemblage et sa maintenance, ce qui, par conséquent, réduit les coûts engagés par de telles actions.

Le motoréducteur décrit ici est adaptable à différents types de freins à tambour et de fonctions de freinage.

Les freins à tambour sont typiquement utilisés dans les véhicules automobiles afin de réaliser trois types de freinage :
- le freinage de service, qui consiste à ralentir et/ou immobiliser le véhicule, typiquement par l'intermédiaire d'une pédale de freinage ;
- le freinage de stationnement, qui permet d'immobiliser le véhicule à l'arrêt, typiquement par l'intermédiaire d'un frein à main ;
- le freinage de secours, qui consiste à ralentir et/ou immobiliser le véhicule en cas de défaillance du freinage de service, et qui est typiquement assuré par le même dispositif que le freinage de stationnement.

Dans la plupart des véhicules équipés de freins à tambour, ces trois types de freinage sont réalisés par le même frein à tambour. Spécifiquement et typiquement, la fonction de freinage de stationnement est assurée par un câble reliant une commande de frein à main dans l'habitacle à un levier pivotant dans le tambour autour d'une extrémité mobile d'un premier segment de freinage et écartant un second segment de freinage via une biellette de réaction.

Un frein à tambour ainsi actionné fournit en mode simplex décrit plus haut un couple de freinage qui peut être insuffisant pour assurer un freinage de stationnement et surtout un freinage de secours.

On a ainsi développé les freins à tambour fonctionnant en mode « duo-servo », dans lesquels une biellette flottante transmet et amplifie l'effort d'un segment à l'autre segment. En particulier, un actionneur écarte une extrémité d'un premier segment lequel s'appuie sur le tambour pendant que son autre extrémité prend appui, par l'intermédiaire de la biellette flottante, sur le deuxième segment par son extrémité en vis-à-vis, flottante elle aussi. Ainsi, l'extrémité opposée du deuxième segment est la seule à prendre appui sur une plaque de butée. Ce type de frein amplifie fortement l'effort d'actionnement mais il est plus délicat à ajuster et provoque une usure irrégulière des garnitures.

Les freins à tambour de type duo-servo sont souvent utilisés exclusivement comme frein de stationnement et de secours, par exemple en utilisant comme tambour la cloche centrale du disque d'un frein à disque de service, combinaison appelée « drum-in-hat » et décrite dans le document EP 0 416 760.

Un autre type de frein combine le mode simplex pour le freinage de service et le mode duo-servo pour le freinage de stationnement et de secours. Dans cet esprit, le document FR 2 697 599 propose d'ajouter un actionneur mécanique à proximité de la plaque de butée. Cet actionneur s'appuie d'un côté sur une extrémité d'un premier segment et de l'autre sur l'extrémité d'un levier supplémentaire agissant sur l'autre segment.

Dans son potentiel d'adaptabilité à ces différents types de frein et/ou de fonctions de freinage, un second aspect de l'invention présente d'autres caractéristiques avantageuses selon lesquelles l'invention peut consister en un frein à tambour dans lequel les deux segments sont montés sur un plateau de façon à pouvoir s'écarter l'un de l'autre pour venir en appui sur la piste de frottement portée par l'intérieur d'un tambour mobile en rotation par rapport audit plateau, l'actionneur réalisé sous la forme d'un actionneur linéaire étant agencé pour écarter les deux segments par leurs deux premières extrémités en vis-à-vis l'une de l'autre.

Dans un tel frein, selon une particularité, les deux segments sont articulés à une biellette mobile par rapport au plateau et qui les relie entre eux au voisinage de leurs deuxièmes extrémités, opposées aux premières extrémités, ladite biellette étant apte à transmettre de l'un des segments à l'autre desdits segments un effort qui pousse cet autre segment en appui contre un élément d'ancrage fixe par rapport au plateau.

Selon une autre particularité, le frein comprend en outre un deuxième actionneur assurant une deuxième fonction de freinage, notamment de service, ce deuxième actionneur étant agencé pour écarter l'une de l'autre les deuxièmes extrémités des deux segments tandis que les premières extrémités viennent en butée par rapport au plateau.

Enfin, selon une autre caractéristique avantageuse, l'invention consiste en un dispositif de freinage, dit "Drum In Hat", pour véhicule ou sous-ensemble de véhicule, notamment routier, comprenant un disque de frein interagissant avec des plaquettes de frein pour réaliser une deuxième fonction de freinage, notamment de frein de service, ce dispositif comprenant un frein agencé pour assurer une première fonction de freinage, notamment de frein de stationnement et/ou de secours, dans lequel le tambour est solidaire de, et coaxial avec, ledit disque de frein.

Le motoréducteur décrit ici est aussi adaptable à d'autres types de freins, comme par exemple un frein à disque.

Dans son potentiel d'adaptabilité à ces différents types de frein et/ou de fonctions de freinage, un autre aspect de l'invention porte ainsi sur un frein à disque comprenant un étrier monté à cheval sur la périphérie d'un disque de freinage solidaire d'une roue mobile en rotation autour demi-train roulant par exemple un porte fusée. Cet étrier est monté solidaire en rotation par rapport audit porte fusée et enserre ledit disque sur ses deux faces entre au moins deux garnitures de frottement sous l'effet d'un effort de serrage appliqué sur au moins l'une desdites garnitures par un piston de freinage déplacé en translation parallèlement à l'axe de roue. Selon l'invention, ce frein à disque comprend un motoréducteur tel qu'exposé ici, qui est monté sur ledit étrier de façon à actionner ledit piston. Ce motoréducteur est par exemple fixé sur l'étrier et entraîne un mécanisme vis-écrou formant un actionneur linéaire coaxial au piston de freinage et dont la rotation déplace le piston pour serrer les garnitures contre le disque.

### Liste des figures

D'autres particularités et avantages de l'invention ressortiront de la description détaillée d'un mode de réalisation nullement limitatif et des dessins annexés où :
- la FIGURE 1 est une vue éclatée du motoréducteur dans un exemple de réalisation de l'invention ;
- la FIGURE 2 est une vue en coupe du motoréducteur de la FIGURE 1 ;
- la FIGURE 3 est une vue en perspective et écorché partiel d'un actionneur de frein de stationnement ou de secours comprenant le motoréducteur de la FIGURE 1, dans un exemple de réalisation de l'invention ;
- la FIGURE 4 est une vue éclatée de l'actionneur de la FIGURE 3 sans le motoréducteur ;
- la FIGURE 5 est une vue éclatée de l'actionneur de la FIGURE 3 ;
- la FIGURE 6 est une vue éclatée de l'actionneur de la FIGURE 3 et d'un plateau de frein à tambour, dans un exemple de réalisation de l'invention ;
- la FIGURE 7 représente schématiquement, en vue de face, le fonctionnement d'un mécanisme de frein à tambour de type « bi-mode » lors du serrage, véhicule immobile, du frein de stationnement ;
- la FIGURE 8 est une vue en perspective d'un mécanisme de frein à tambour de type « bi-mode » comprenant l'actionneur de la FIGURE 3, dans un exemple de réalisation de l'invention.

### Description d'un exemple de mode réalisation

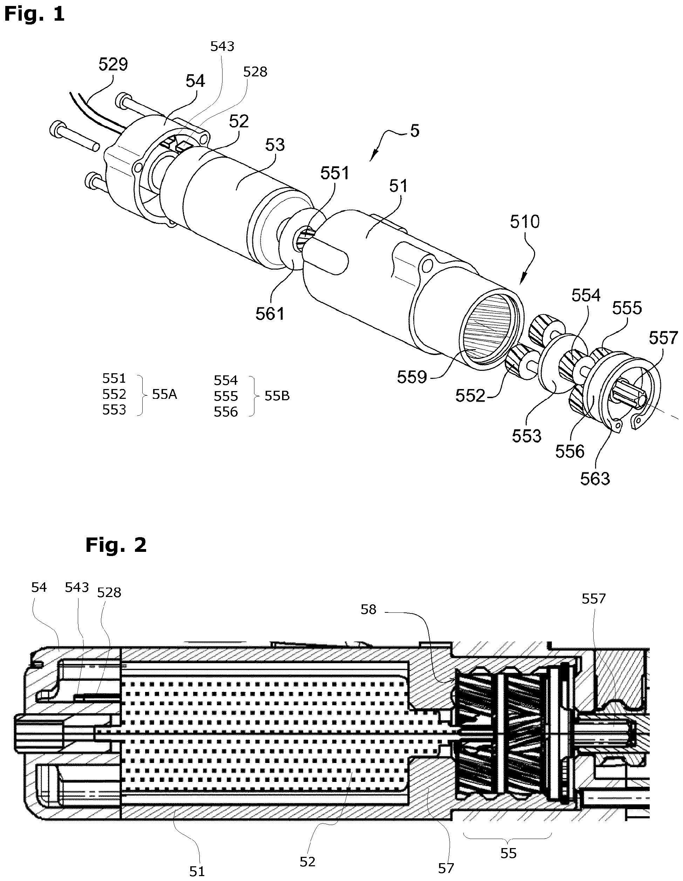

Dans le mode de réalisation de la FIGURE 1, le motoréducteur 5 comprend un moteur électrique 52, par exemple un moteur à courant continu de forme globalement cylindrique. Ce moteur est renfermé dans un boîtier 51 de forme globalement cylindrique, sur lequel est assemblé de façon étanche un couvercle arrière 54, qui est traversé de façon étanche par les fils électriques 529 d'alimentation et/ou de commande du moteur.

Avantageusement, le boîtier 51 est prévu avec un logement intérieur cylindrique d'un diamètre suffisamment grand pour pouvoir accueillir des moteurs de plusieurs diamètres différents, par exemple jusqu'à 34 mm, de façon à pouvoir fabriquer des motoréducteurs 5 de plusieurs valeurs de puissance différentes avec un même modèle de boîtier.

Pour bien positionner et maintenir le moteur dans le boîtier, quel que soit le diamètre du moteur, celui-ci est emboîté dans une cale tubulaire 53 dont l'épaisseur représente la différence entre le rayon du moteur 52 et celui du logement intérieur du boîtier 51. Pour une gamme donnée de moteurs de diamètres différents, il suffit ainsi de fabriquer une gamme de cales aux diamètres intérieurs correspondants, ce qui est plus simple et économique que de fabriquer des boîtiers de dimensions différentes.

Alternativement, la cale tubulaire 53 est solidaire du couvercle arrière 54, ou même formée sur celui-ci. En variante, ce couvercle présente une forme plus allongée que celle représentée, de façon à recouvrir toute la longueur du moteur 52. Dans ce cas, la gamme de moteurs différents correspond avantageusement à une gamme de couvercles différents, pour un même boîtier 51.

La cale tubulaire 53, ou le couvercle 54 s'il la remplace, est en outre réalisée en une matière qui forme un écran contre les perturbations électromagnétiques et/ou qui réalise un diffuseur thermique pour la chaleur produite par le moteur.

Du côté de l'arbre du moteur, le boîtier 51 comporte une ouverture de sortie 510 cylindrique renfermant un réducteur à engrenages, qui est entraîné en entrée par le moteur 52 et entraîne en sortie l'arbre de sortie 557 du motoréducteur 5. Comme indiqué en FIGURE 2, le moteur 52 et le réducteur 55 sont séparés par un collet 57 qui fait partie intégrante du boîtier et fait saillie radialement vers l'intérieur à partir de la surface intérieure du boîtier.

La carter du moteur 52 comporte au moins une dent 528 excentrée qui s'emboîte axialement dans un évidement 543 du couvercle 54 pour immobiliser le moteur 52 à l'encontre de toute rotation dans le boîtier 51.

L'arbre du moteur traverse le collet 57 et un flasque d'étanchéité 561 adossé au collet. Il porte un pignon 551 qui lui est solidaire et forme un planétaire menant d'un premier train épicycloïdal 55A dans lequel des premiers satellites 552 engrènent avec ce planétaire et avec une première couronne 559 dentée intérieurement qui les entoure. Les premiers satellites 552 sont montés en libre rotation sur des tourillons excentrés d'un premier porte-satellites 553, et en libre translation axiale sur les tourillons entre le collet 57 et le premier porte-satellites 553. Ce dernier constitue la sortie du premier train épicycloïdal 55A et porte un pignon planétaire 554 dont il est solidaire en rotation, formant l'entrée d'un deuxième train épicycloïdal 55B comprenant des deuxièmes satellites 555 engrenant avec le planétaire 554 et avec une deuxième couronne dentée intérieurement qui les entoure. Les deuxièmes satellites 555 sont montés en libre rotation sur des tourillons d'un deuxième porte-satellites 556, et en libre translation axiale sur ces tourillons entre le premier porte-satellites 553 et le deuxième porte-satellites 556. Ce dernier constitue la sortie du deuxième train épicycloïdal 55B et porte l'arbre de sortie 557 du motoréducteur 5, dont il est solidaire. Le deuxième porte-satellites 556 est maintenu en position axiale dans l'ouverture 510 avec un jeu de fonctionnement approprié par un jonc d'arrêt 563, par exemple un Circlips (marque déposée), engagé dans une rainure formée intérieurement dans la matière du boîtier 51.

Dans ce mode de réalisation, les deux trains 55A, 55B sont montés dans le boîtier 51 à la suite d'un de l'autre, dans le prolongement axial du moteur 52. L'ensemble des composants mobiles du réducteur 55 a une liberté de positionnement axial mutuel pour un jeu de fonctionnement convenable entre le jonc d'arrêt 563 et un épaulement 58 formé intérieurement sur le boîtier 51, en particulier sur le collet 57.

La première et la deuxième couronnes sont coaxiales avec le moteur 52. De préférence, les deux trains sont à denture hélicoïdale corrigée.

Les deux couronnes dentées intérieurement sont formées dans la matière du boîtier 51, sur la face intérieure de l'ouverture 510. De préférence, le boîtier est réalisé dans une matière moulable et les deux couronnes sont venues de moulage avec le boîtier. Il est par ailleurs préféré que les deux couronnes soient de même diamètre et de même taille de denture (à part éventuellement la longueur axiale de la denture, le deuxième train subissant des efforts qui sont multipliés par le rapport de réduction du premier train). Très préférentiellement, comme représenté sur la FIGURE 2, les deux couronnes sont réalisées par une seule et même denture dont la dimension axiale est suffisante pour qu'elle fasse simultanément partie des deux trains épicycloïdaux.

Le boîtier 51 et le couvercle 54 du motoréducteur sont réalisés par exemple en métal moulé, ou en polymères chargé de fibres de verre. Les satellites 552, 555 sont réalisés par exemple en polyoxyméthylène. Les porte-satellites 553, 556 et leurs arbres de sortie 554, 557 avec la forme d'entraînement de sortie sont réalisés par exemple en acier, usiné ou par frittage laser.

Dans un exemple de réalisation, les dentures et dimensions du motoréducteur 5 ont été déterminées pour produire un rapport de réduction d'une valeur de 23,04:1 pour un rendement compris entre 0,85 et 0,92.

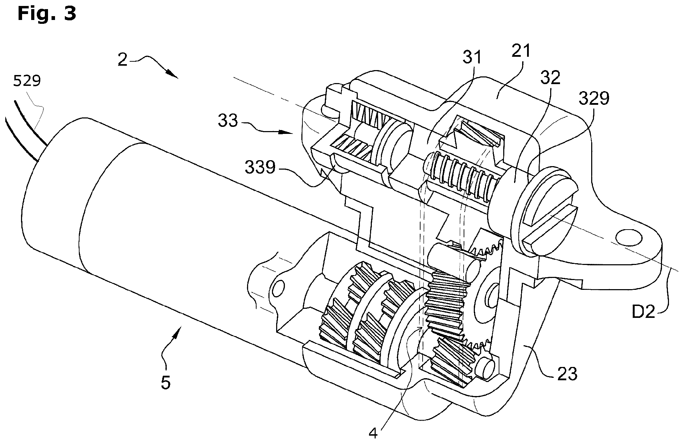

Dans le mode de réalisation des FIGURES 3 à 8, la rotation du motoréducteur 5 est transmise à un ensemble d'actionnement linéaire 3 d'un frein de stationnement ou de secours, par un engrenage de transmission 4 comprenant des roues dentées à axes parallèles, engrenées entre elles et montées pour transmettre le mouvement rotatif de la motorisation à l'un des éléments de l'ensemble d'actionnement linéaire. Les axes de ces roues dentées sont aussi parallèles à l'axe de rotation du motoréducteur 5 ainsi qu'à la direction D2 du mouvement linéaire obtenu.

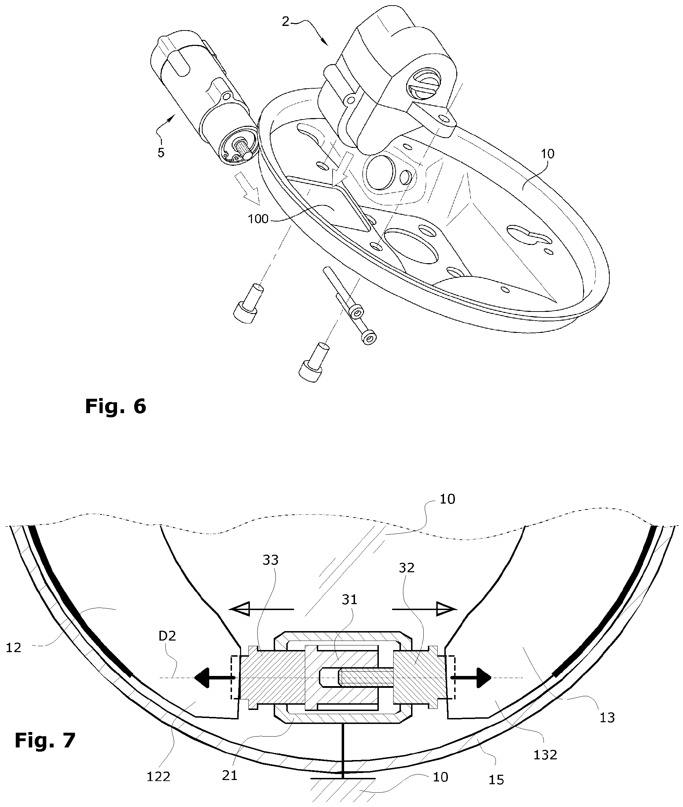

L'ensemble d'actionnement linéaire 3 est monté dans un boîtier 21, aussi appelé boîtier principal. Le boîtier 21 sert à ancrer l'actionneur linéaire 2 sur un plateau 10 d'un frein à tambour, comme illustré en FIGURE 6. Le boîtier 21 est réalisé par exemple en métal, comme de la fonte d'aluminium. Sur ce boîtier principal qui se trouve à l'intérieur du tambour est assemblé un boîtier secondaire 23, de façon à renfermer entre eux de façon étanche (au moins à la poussière) l'engrenage de transmission 4 comprenant plusieurs roues dentées à contact extérieur, ici trois roues dentées à denture hélicoïdale corrigée.

Dans ce mode de réalisation, la roue d'entrée 41 de l'engrenage de transmission 4 est couplée en rotation avec le motoréducteur 5, ici par emboîtement d'un alésage axial portant une forme d'entraînement (non représentée) avec une forme d'entraînement complémentaire (non représentée) portée par l'arbre de sortie 557 du motoréducteur 5. La géométrie de ces deux formes d'entraînement complémentaires est avantageusement choisie d'un type qui permet entre elles un certain jeu angulaire avec peu ou pas de dommages et de pertes de rendement de la puissance transmise. Cette géométrie est ici de type multi-lobulaire, par exemple à six branches ou hexalobulaire tel que défini par la norme ISO 10664, ou dans une version à cinq branches, ou l'une ou l'autre des versions proposées sous le nom de « Torx » (marque déposée) par la société Textron.

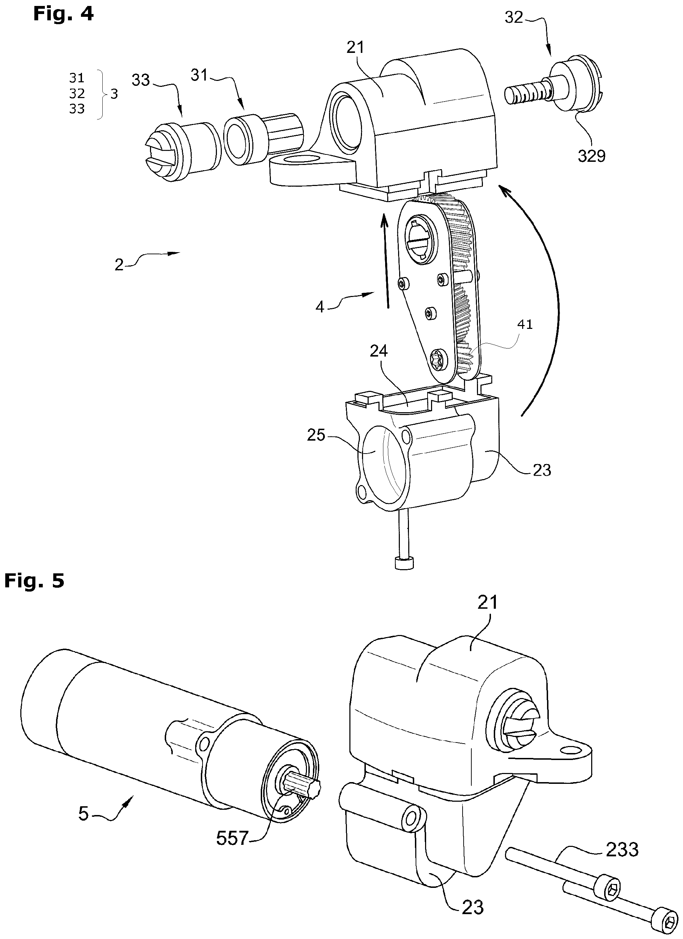

Comme indiqué en FIGURE 4, le boîtier secondaire 23 est muni d'un logement 25 qui reçoit l'arbre de sortie 557 du motoréducteur 5, et dans lequel le boîtier 51 vient s'emboîter de façon étanche par sa partie entourant le réducteur. Une fois l'engrenage de transmission 4 en place dans le logement 24 du boîtier secondaire, sa roue d'entrée 41 est en place dans le logement 25 pour s'accoupler automatiquement avec l'arbre de sortie 557 du motoréducteur lorsque son boîtier 51 est emboîté par mouvement axial dans le logement 25. Des vis 233 sont ensuite mises en place pour fixer le boîtier 51 du motoréducteur au boîtier secondaire 23, d'une façon empêchant le boîtier 51 de tourner autour de son axe malgré le couple de réaction subi par la couronne 559.

Comme illustré en FIGURE 6, l'actionneur linéaire 2 est monté et fixé sur la face intérieure du plateau 10 en étant engagé de façon sensiblement étanche dans une ouverture 100 du plateau 10 de façon que le boîtier secondaire 23 dépasse à l'extérieur du tambour. Ensuite, le motoréducteur 5 est assemblé comme exposé plus haut au boîtier secondaire qui dépasse du plateau du côté opposé aux segments, c'est-à-dire du côté « arrière » du plateau. Ainsi, le motoréducteur 5 et l'ensemble d'actionnement linéaire 3 ont des axes sensiblement parallèles et sont disposés de deux côtés opposés l'un à l'autre par rapport au plateau 10.

Comme on le voit en FIGURE 6, le motoréducteur 5 et le boîtier secondaire 23 sont la seule partie de l'actionneur linéaire 2 à dépasser à l'arrière du plateau 10. L'encombrement additionnel lié à l'actionnement électrique est ainsi limité, et peut se loger dans une découpe de petite taille dans la ferrure de fixation du plateau 10, par exemple sur un bras oscillant d'un demi-train arrière.

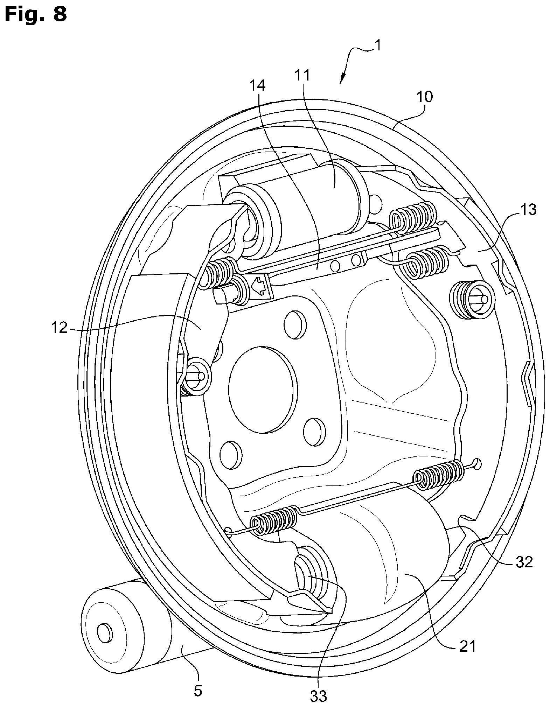

La FIGURE 8 représente un mécanisme de frein à tambour « bi-mode » dans un mode de réalisation de l'invention. Ce mode de réalisation peut être mis en oeuvre avec différents types d'actionneurs pour le mode de frein de service.

L'actionneur linéaire 2 (voir aussi FIGURE 7) assure l'actionnement en mode de frein de stationnement ou de secours. L'ensemble d'actionnement linéaire 3 appuie sur des premières extrémités 122, 132 des segments 12, 13 pour les écarter l'une de l'autre, et mettre ainsi les segments en appui contre la piste de frottement du tambour 15 du frein. Depuis la position de repos, ou depuis la position de freinage de service, l'actionneur linéaire 2 met ainsi le frein en position de freinage de stationnement, et le retour à la position de repos est réalisé par exemple par des ressorts de rappel reliant entre eux les deux segments en les sollicitant l'un vers l'autre. Lorsque le frein est en position de freinage de stationnement ou de secours, l'ensemble formé par les deux segments reliés entre eux par une biellette 14 au voisinage de leurs secondes extrémités et par l'ensemble d'actionnement linéaire 3 au voisinage de leurs premières extrémités 122, 132 tend à être entraîné en rotation avec le tambour. Ce mouvement est empêché par butée de l'un de deux épaulements 329, 339 (selon le sens de rotation) de l'ensemble d'actionnement linéaire 3 contre une surface correspondante du boîtier 21.

Le mode de réalisation qui vient d'être décrit n'est nullement limitatif. En particulier, les éléments propres à l'actionneur 2 du frein de stationnement ou de secours peuvent être intégrés tels quels au sein de tout type de frein à tambour, notamment d'un frein à tambour bi-mode de type duo-servo ou encore de type drum-in-hat.

### Nomenclature

- 1: frein à tambour
- 10: plateau support
- 100: ouverture de plateau
- 11: deuxième actionneur - frein de service
- 12, 13: segments de freinage
- 122, 132: premières extrémités des segments
- 14: élément intercalaire - biellette de rattrapage de jeu
- 15: tambour de roue
- 2: actionneur linéaire - frein de stationnement ou de secours
- 21: boîtier principal
- 23: boîtier secondaire
- 233: vis de fixation du boîtier secondaire sur le boîtier du motoréducteur
- 24: logement de l'engrenage de transmission dans le boîtier secondaire
- 25: logement du motoréducteur dans le boîtier secondaire
- 3: ensemble d'actionnement linéaire
- 31: écrou de système vis-écrou
- 32: vis de système vis-écrou
- 329: épaulement d'appui de la vis - transmission du couple de freinage
- 33: piston élastique linéaire - « spring package »
- 339: épaulement d'appui du piston élastique - transmission du couple de freinage
- 4: engrenage de transmission
- 41: roue dentée - roue d'entrée
- 5: motoréducteur
- 51: boîtier de motoréducteur
- 510: ouverture de sortie cylindrique - logement de train épicycloïdal
- 52: moteur électrique
- 528: dent
- 529: alimentation électrique du moteur
- 53: cale tubulaire - formant écran électromagnétique et diffuseur thermique
- 54: couvercle arrière de moteur
- 543: évidement
- 55: mécanisme de réduction épicycloïdal
- 55A: premier train épicycloïdal
- 551: pignon planétaire de 1° train épicycloïdal - pignon d'entrée
- 552: pignons satellites de 1° train épicycloïdal
- 553: porte satellites de 1° train épicycloïdal
- 55B: deuxième train épicycloïdal
- 554: pignon planétaire de 2° train épicycloïdal
- 555: pignons satellites de 2° train épicycloïdal
- 556: porte satellites de 2° train épicycloïdal
- 557: arbre de sortie
- 559: couronne des trains épicycloïdaux
- 561: flasque d'étanchéité
- 563: jonc d'arrêt
- 57: collet de séparation du moteur et du mécanisme de réduction
- 58: épaulement côté réducteur

## Revendications

1. Motoréducteur (5) comprenant un moteur électrique (52), un réducteur et une sortie rotative (557) couplée audit moteur électrique par l'intermédiaire dudit réducteur, comprenant en outre un boîtier (51) dans lequel est fixé ledit moteur, ledit réducteur étant à train épicycloïdal, **caractérisé en ce que** le réducteur comprend au moins une couronne (559) dentée intérieurement qui est solidaire du boîtier (51) et formée dans la matière dudit boîtier.

2. Motoréducteur selon la revendication précédente, **caractérisé en ce que** le réducteur (55) comprend deux trains épicycloïdaux (55A, 55B) montés mécaniquement en série de façon que la sortie (553) d'un premier (55A) desdits trains soit solidaire en position angulaire de l'entrée (554) d'un deuxième (55B) desdits trains, l'au moins une couronne (559) comprenant deux couronnes faisant partie chacune de l'un desdits deux trains.

3. Motoréducteur selon la revendication précédente, **caractérisé en ce que** les deux couronnes sont formées par une unique denture ayant une dimension axiale correspondant à celle des deux trains (55A, 55B) montés à la suite l'un de l'autre dans le boîtier (51), dans le prolongement axial du moteur (52).

4. Motoréducteur selon l'une quelconque des revendications précédentes, **caractérisé en ce que** le boîtier (51) comprend un collet (57) séparant le moteur (52) et le réducteur (55), et **en ce que** ledit réducteur comprend une roue planétaire menante (551), un porte-satellites mené (553), et des satellites (552) qui engrènent avec la roue planétaire menante et avec la couronne, et sont montés en libre rotation sur des tourillons dudit porte-satellites mené et en libre translation axiale sur lesdits tourillons entre ledit collet et ledit porte-satellites mené.

5. Motoréducteur selon la revendication 2 ou 3, **caractérisé en ce que** le deuxième train (55B) comprend une roue planétaire menante (554) solidaire en rotation d'un porte-satellites (553) du premier train (55A), un porte-satellites mené (556), et des satellites (555) qui engrènent avec la roue planétaire menante du deuxième train et avec la couronne du deuxième train, et sont montés en libre rotation sur des tourillons dudit porte-satellites mené et en libre translation axiale sur lesdits tourillons entre ledit porte-satellites mené (556) et ledit porte-satellites (553) du premier train.

6. Motoréducteur selon l'une quelconque des revendications 1 à 3, **caractérisé en ce que** la sortie rotative (557) est solidaire d'un porte-satellites (556) qui est maintenu axialement par un jonc d'arrêt (563) engagé dans une rainure formée dans la matière du boîtier (51) à une première extrémité de la couronne dentée (559), l'ensemble des composants mobiles du réducteur (55) ayant une liberté de positionnement axial mutuel entre ledit jonc d'arrêt et un épaulement (58) formé intérieurement sur ledit boîtier en une seconde extrémité de ladite couronne.

7. Motoréducteur selon l'une quelconque des revendications précédentes, **caractérisé en ce que** la couronne (559) et le moteur (52) sont coaxiaux.

8. Frein à tambour (1) comprenant deux segments (12, 13) montés sur un plateau (10) de façon à pouvoir s'écarter l'un de l'autre pour venir en appui sur une piste de frottement portée par l'intérieur d'un tambour mobile en rotation par rapport audit plateau, **caractérisé en ce qu'**il comprend un actionneur linéaire (2) entraîné par un motoréducteur selon l'une quelconque des revendications précédentes, lequel actionneur linéaire est agencé pour écarter l'une de l'autre deux premières extrémités (122, 132) desdits segments qui sont en vis-à-vis l'une de l'autre.

9. Frein selon la revendication précédente, **caractérisé en ce que** les deux segments (12, 13) sont articulés à une biellette (14) mobile par rapport au plateau et qui les relie entre eux au voisinage de leurs deuxièmes extrémités, opposées aux premières extrémités, ladite biellette étant apte à transmettre de l'un (12) desdits segments à l'autre (13) desdits segments un effort qui pousse ledit autre segment (13) en appui contre un élément d'ancrage (21) fixe par rapport au plateau (10).

10. Frein selon la revendication 8 ou 9, **caractérisé en ce qu'**il comprend en outre un deuxième actionneur assurant une deuxième fonction de freinage, notamment de service (11), ledit deuxième actionneur étant agencé pour écarter l'une de l'autre les deuxièmes extrémités des deux segments (12, 13) tandis que les premières extrémités (122, 132) viennent en butée par rapport au plateau (10).

11. Dispositif de freinage pour véhicule ou sous-ensemble de véhicule, notamment routier, comprenant un disque de frein interagissant avec des plaquettes de frein pour réaliser une deuxième fonction de freinage, notamment de frein de service, **caractérisé en ce qu'**il comprend un frein à tambour selon la revendication 8 ou 9, agencé pour assurer une première fonction de freinage, notamment de frein de stationnement et/ou de secours, et **en ce que** son tambour est solidaire de, et coaxial avec, ledit disque de frein.

12. Frein à disque comprenant un étrier monté à cheval sur la périphérie d'un disque de freinage solidaire d'une roue mobile en rotation autour d'un porte fusée, ledit étrier étant monté solidaire en rotation par rapport audit porte fusée et enserrant ledit disque sur ses deux faces entre au moins deux garnitures de frottement sous l'effet d'un effort de serrage appliqué sur au moins l'une desdites garnitures par un piston de freinage déplacé en translation parallèlement à l'axe de roue, **caractérisé en ce qu'**il comprend un motoréducteur selon l'une quelconque des revendications 1 à 7 monté sur ledit étrier et agencé pour actionner ledit piston.

## Patentansprüche

1. Getriebemotor (5) umfassend einen Elektromotor (52), ein Untersetzungsgetriebe und einen mit dem Elektromotor über das Untersetzungsgetriebe gekoppelten Drehausgang (557), außerdem umfassend ein Gehäuse (51), in dem der Motor befestigt ist, wobei das Untersetzungsgetriebe mit Umlaufrädergetriebe ist, **dadurch gekennzeichnet, dass** das Untersetzungsgetriebe mindestens ein innenverzahntes Hohlrad (559) umfasst, das mit dem Gehäuse (51) fest verbunden und aus dem gleichen Werkstoff wie das Gehäuse gebildet ist.

2. Getriebemotor nach dem vorhergehenden Anspruch, **dadurch gekennzeichnet, dass** das Untersetzungsgetriebe (55) zwei derart mechanisch in Reihe gelagerte Umlaufrädergetrieben (55A, 55B) umfasst, dass der Ausgang (553) eines ersten (55A) der Umlaufrädergetrieben mit dem Eingang (554) eines zweiten (55B) der Umlaufrädergetrieben in Winkelstellung fest verbunden ist, wobei das mindestens eine Hohlrad (559) zwei Hohlräder umfasst, die jeweils Teil eines der beiden Umlaufrädergetrieben ist.

3. Getriebemotor nach dem vorhergehenden Anspruch, **dadurch gekennzeichnet, dass** die beiden Hohlräder durch eine einzelne Verzahnung gebildet sind, mit einer axialen Größe entsprechend der der beiden, hinter einander im Gehäuse (51) in der axialen Flucht des Motors (52) gelagerten Umlaufrädergetrieben (55A, 55B).

4. Getriebemotor nach einem der vorhergehenden Ansprüche, **dadurch gekennzeichnet, dass** das Gehäuse (51) einen den Motor (52) und das Untersetzungsgetriebe (55) trennenden Hals (57) umfasst, und dadurch dass das Untersetzungsgetriebe ein treibendes Planetenrad (551), einen getriebenen Planetensteg (553) und Satelliten (552) umfasst, welche in das treibende Planetenrad und in das Hohlrad eingreifen und frei drehend auf Lagerzapfen des betriebenen Planetenstegs und in axialer Richtung frei beweglich auf den Lagerzapfen zwischen dem Hals und dem betriebenen Planetensteg gelagert sind.

5. Getriebemotor nach dem Anspruch 2 oder 3, **dadurch gekennzeichnet, dass** das zweite Umlaufrädergetriebe (55B) ein treibendes, mit einem Satellitensteg (553) des ersten Umlaufrädergetriebes (55A) drehfest verbundene Planetenrad (554), einen getriebenen Satellitensteg (556) und Satelliten (555) umfasst, die in das treibende Planetenrad des zweiten Umlaufrädergetriebes und in die Hohlrad des zweiten Umlaufrädergetriebes eingreifen und frei drehend auf Lagerzapfen des getriebenen Satellitenstegs und in axialer Richtung frei beweglich auf den Lagerzapfen zwischen dem getriebenen Satellitensteg (556) und dem Satellitensteg (553) des ersten Umlaufrädergetriebes gelagert sind.

6. Getriebemotor nach einem der vorhergehenden Ansprüche 1 bis 3, **dadurch gekennzeichnet, dass** der Drehausgang (557) mit einem Satellitensteg (556) fest verbunden ist, der durch einen Sicherungsring (563) axial gehalten wird, welcher in einer im Werkstoff des Gehäuses (51) an einem ersten Ende des verzahnten Hohlrads (559) gebildeten Nut eingerückt ist, wobei die Anordnung der beweglichen Bestandteile des Untersetzungsgetriebes (55) zwischen dem Sicherungsring und einer innenseitig auf dem Gehäuse an einem zweiten Ende des Hohlrads gebildeten Auskragung (58) in axialer Richtung gegenseitig frei positionierbar ist.

7. Getriebemotor nach einem der vorhergehenden Ansprüche, **dadurch gekennzeichnet, dass** das Hohlrad (559) und der Motor (52) koaxial sind.

8. Trommelbremse (1) umfassend zwei auf einer Platte (10) derart gelagerte Bremsbacken (12, 13), dass sie auseinander spreizen können, um auf einem Reibungsring aufzuliegen, der vom Inneren einer gegenüber der Platte dreh beweglichen Trommel getragen wird, **dadurch gekennzeichnet, dass** sie ein Linearstellglied (2) umfasst, das durch einen Getriebemotor nach einem der vorhergehenden Ansprüche angetrieben wird, wobei das Linearstellglied derart angeordnet ist, um zwei erste, gegenüber einander aufgenommene Enden (122, 132) der Bremsbacken auseinander zu spreizen.

9. Bremse nach dem vorhergehenden Anspruch, **dadurch gekennzeichnet, dass** die zwei Bremsbacken (12, 13) mit einer gegenüber der Platte beweglichen Schubstange (14) gelenkig verbunden sind, welche sie in der Nähe ihrer zweiten, den ersten Enden gegenüberliegenden Enden miteinander verbindet, wobei die Schubstange dafür geeignet ist, von einer (12) der Bremsbacken auf die andere (13) der Bremsbacken eine Kraft zu übertragen, welche die andere Bremsbacke (13) gegen ein gegenüber der Platte (10) feststehendes Verankerungsmittel (21) andrückt.

10. Bremse nach dem Anspruch 8 oder 9, **dadurch gekennzeichnet, dass** sie außerdem ein zweites Stellglied umfasst, das für eine zweite Bremsfunktion, insbesondere einer Betriebsbremse (11) sorgt, wobei das zweite Stellglied derart angeordnet ist, um die zweiten Enden der beiden Bremsbacken (12, 13) auseinander zu spreizen, während die ersten Enden (122, 132) gegenüber der Platte (10) in Anschlag kommen.

11. Bremsvorrichtung für Fahrzeug oder Fahrzeugunteranordnung, insbesondere Straßenfahrzeug, umfassend eine mit Bremsbelägen in Wechselwirkung tätige Bremsscheibe zur Erzeugung einer zweiten Bremsfunktion, insbesondere der Betriebsbremse, **dadurch gekennzeichnet, dass** sie eine Trommelbremse nach dem Anspruch 8 oder 9 umfasst, derart angeordnet, um für eine erste Bremsfunktion, insbesondere einer Park- und/oder Hilfsbremse zu sorgen, und dass ihre Trommel mit der Bremsscheibe fest und koaxial verbunden ist.

12. Scheibenbremse umfassend einen Bremssattel, welcher beidseitig auf dem Umfang einer mit einem um einen Radzapfen dreh beweglichen Rad fest verbundenen Bremsscheibe gelagert ist, wobei der Bremssattel drehfest mit dem Radzapfen verbunden ist und die Scheibe an ihren beiden Seiten zwischen mindestens zwei Reibbelägen unter der Wirkung einer Spannkraft einschließt, die auf mindestens einen der Belägen durch einen parallel zur Radachse in Translation bewegten Bremskolben aufgebracht wird, **dadurch gekennzeichnet, dass** sie einen Getriebemotor nach einem der Ansprüche 1 bis 7 umfasst, welcher auf dem Bremssattel gelagert und zur Tätigung des Kolbens angeordnet ist.

## Claims

1. Geared motor (5) comprising an electric motor (52), a reduction gear and a rotary output (557) coupled to said electric motor via said reduction gear, further comprising a housing (51) in which said motor is fixed, said reduction gear having a planetary gear set, **characterized in that** the reduction gear comprises at least one internal ring gear (559) that is integral with the housing (51) and formed in the material of said housing.

2. Geared motor according to the preceding claim, **characterized in that** the reduction gear (55) comprises two planetary gear sets (55A, 55B) mounted mechanically in series such that the output (553) of a first (55A) of said gear sets is firmly fixed in an angular position to the input (554) of a second (55B) of said gear sets, the at least one ring gear (559) comprising two ring gears each forming part of one of said two gear sets.

3. Geared motor according to the preceding claim, **characterized in that** the two ring gears are formed by a single set of teeth with an axial dimension that corresponds to the axial dimension of the two gear sets (55A, 55B) mounted in the housing (51) one after the other in the axial extension of the motor (52).

4. Geared motor according to any one of the preceding claims, **characterized in that** the housing (51) comprises a collar (57) separating the motor (52) and the reduction gear (55), and **in that** said reduction gear comprises a driving planet gear (551), a driven planet carrier (553), and pinion gears (552) that mesh with the driving planet gear and the ring gear, and are mounted free to rotate on pins of said driven planet carrier and free to translate axially on said pins between said collar and said driven planet carrier.

5. Geared motor according to claim 2 or 3, **characterized in that** the second gear set (55B) comprises a driving planet gear (554) firmly fixed in rotation to a planet carrier (553) of the first gear set (55A), a driven planet carrier (556), and pinion gears (555) that mesh with the driving planet gear of the second gear set and with the ring gear of the second gear set, and are mounted free to rotate on pins of said driven planet carrier and free to translate axially on said pins between said driven planet carrier (556) and said planet carrier (553) of the first gear set.

6. Geared motor according to any one of claims 1 to 3, **characterized in that** the rotary output (557) is firmly fixed to a planet carrier (556) that is retained axially by a snap ring (563) engaged in a groove formed in the material of the housing (51) at a first end of the ring gear (559), all of the mobile elements of the reduction gear (55) being freely positioned axially in relation to each other between said snap ring and a shoulder (58) formed on the inside of said housing at a second end of said ring gear.

7. Geared motor according to any one of the preceding claims, **characterized in that** the ring gear (559) and the motor (52) are coaxial.

8. Drum brake (1) comprising two shoes (12, 13) mounted on a backing plate (10) so as to be able to move apart from each other to press on a braking surface borne by the inside of a drum mobile in rotation relative to said backing plate, **characterized in that** it comprises a linear actuator (2) driven by a geared motor according to any one of the preceding claims, which linear actuator is arranged in order to move apart two first ends (122, 132) of said shoes, which are facing each other.

9. Brake according to the preceding claim, **characterized in that** the two shoes (12, 13) are hinged on a rod (14) that is mobile relative to the backing plate and connects them to each other in the vicinity of the second ends thereof, opposite the first ends, said rod being capable of transmitting from one shoe (12) to the other (13) a force that pushes said other shoe (13) against an anchor (21) that is fixed relative to the backing plate (10).

10. Brake according to claim 8 or 9, **characterized in that** it also comprises a second actuator providing a second braking function, in particular service braking (11), said second actuator being arranged in order to move the second ends of the two shoes (12, 13) apart from each other while the first ends (122, 132) abut against the backing plate (10).

11. Braking device for a vehicle or vehicle sub-assembly, in particular a road vehicle, comprising a brake disc interacting with brake pads to provide a second braking function, in particular service braking, **characterized in that** it comprises a drum brake according to claim 8 or 9, arranged in order to provide a first braking function, in particular parking and/or emergency braking, and **in that** the drum thereof is firmly fixed to and coaxial with said brake disc.

12. Disc brake comprising a caliper mounted straddling the periphery of a brake disc that is firmly fixed to a wheel mobile in rotation about a hub carrier, said caliper being firmly fixed in rotation to said hub carrier and clasping the two faces of said disc between at least two friction linings under the effect of a clamping force applied to at least one of said linings by a brake piston displaced in translation in parallel to the wheel shaft, **characterized in that** it comprises a geared motor according to any one of claims 1 to 7 mounted on said caliper and arranged in order to actuate said piston.
